# EUROPEAN PATENT SPECIFICATION

(11) **EP 3 990 586 B1**
(45) Date of publication and mention of the grant of the patent: **09.12.2026**
(21) Application number: 20832721.3
(22) Date of filing: 26.06.2020
(51) Int. Cl.: C10L 3/08, C10L 3/10, C01B 3/384, C01B 3/48

(54) **PROCESS FOR REDUCING AN ORGANIC MATERIAL TO PRODUCE METHANE AND/OR HYDROGEN**
VERFAHREN ZUR REDUKTION EINES ORGANISCHEN MATERIALS ZUR HERSTELLUNG VON METHAN UND / ODER WASSERSTOFF
PROCÉDÉ DE RÉDUCTION D'UNE MATIÈRE ORGANIQUE POUR PRODUIRE DU MÉTHANE ET/OU DE L'HYDROGÈNE

(30) Priority: 27.06.2019 US 201962867788 P
(43) Date of publication of application: 04.05.2022
(73) Proprietor: Hallett, Douglas John Frederick, Kingston, ON K7L 4H9 (CA); Willis, David Jonathan, Kingston, ON K7P 1L5 (CA)
(72) Inventor: Hallett, Douglas John Frederick, Kingston, ON K7L 4H9 (CA); Willis, David Jonathan, Kingston, ON K7P 1L5 (CA)
(74) Representative: Guardian IP Consulting I/S
(86) International application number: PCT/CA2020/050899
(87) International publication number: WO 2020/257946

(56) References cited:
- EP-A1- 3 434 753
- WO-A1-01/42132
- WO-A1-2011/060556
- WO-A1-2011/159334
- WO-A1-2014/133486
- US-A- 4 436 532
- US-A1- 2008 031 809
- US-B2- 8 343 241
- GUERRERO M R BARAY ET AL: "Optimal slow pyrolysis of apple pomace reaction conditions for the generation of a feedstock gas for hydrogen production", INTERNATIONAL JOURNAL OF HYDROGEN ENERGY, ELSEVIER, AMSTERDAM, NL, vol. 41, no. 48, 31 October 2016 (2016-10-31), pages 23232 - 23237, XP029844313, ISSN: 0360-3199, DOI: 10.1016/J.IJHYDENE.2016.10.066
- FULLER ET AL: "Degradation of explosives-related compounds using nickel catalysts", CHEMOSPHERE, PERGAMON PRESS, OXFORD, GB, vol. 67, no. 3, 18 January 2007 (2007-01-18), pages 419 - 427, XP005834795, ISSN: 0045-6535, DOI: 10.1016/J.CHEMOSPHERE.2006.10.002
- MOHAN C U PITTMAN D ET AL: "Pyrolysis of Wood/Biomass for bio-oil: A critical review", vol. 20, 1 January 2006 (2006-01-01), pages 848 - 889, XP002755333, ISSN: 0887-0624, Retrieved from the Internet <URL:10.1021/ef0502397> [retrieved on 20060310]

## Description

### FIELD OF THE INVENTION

The present invention pertains to a process for reducing an organic material to produce methane and/or hydrogen. More particularly, the present invention pertains to a process for reducing an organic material to produce methane and/or hydrogen as end product(s), using excess hydrogen under controlled reaction conditions.

### BACKGROUND

In recent years, many countries and international committees have proposed or issued regulations towards the production of energy from alternative or renewable sources as well as the need to drastically reduce greenhouse gases (GHGs) and other factors which are having an impact on global warming.

In 2014, the United States Environmental Protection Agency (US EPA) developed the "Clean Power Plan" policy aimed at reducing carbon pollution from power plants. Power plants are the largest source of carbon dioxide (CO₂) emissions in the United States, accounting for roughly one-third of all domestic greenhouse gas emissions. This plan was designed to reduce carbon pollution, particularly CO₂ emissions, from the power sector by 30% by 2030. The US EPA's New Source Performance Standards (NSPS) for GHG emissions from power plants now specifies that the limit for coal power plants is 636 kg CO₂/MWh and 454 kg CO₂/MWh for natural gas combustion turbine power plants. These types of standards result in an increased demand to improve existing power and energy production efficiencies as well as search for new methods for energy production from non-fossil fuel sources.

On a global basis, measures have been taken to address the growing concerns of GHG emissions and global warming. In 1997, the Kyoto Protocol was adopted and entered into force in 2005. Currently, there are 192 parties to the Kyoto Protocol. The first commitment period of the Kyoto Protocol (2008 to 2012) saw the developed countries (Annex B to the Protocol) commit to GHG emission reductions of at least 5% compared to 1990 levels. The Kyoto Protocol was eventually extended in 2012, and the second commitment period (2013 to 2020) was agreed upon by the Parties with Annex B countries committing to reduce their emissions by a total of 18% by 2020 compared with 1990 levels. The European Union committed to a 20% reduction. The global commitment to GHG reduction creates a demand for cleaner and more efficient methods for energy production, waste reduction and pollution control. Therefore, the incentive for technologies to address these issues is currently in high demand.

Natural gas is a widely used fuel for power generation. Cogeneration, gas turbines and steam turbines produce electricity. Natural gas contains a high concentration of methane, and combusts cleaner than all other fossil fuels, such as oil, coal, gasoline and diesel. This cleaner combustion produces less greenhouse gases (GHG) per unit of energy released. Power generation using natural gas is therefore considered the cleanest hydrocarbon source of energy available. Natural gas is also widely used as a base for the manufacture of products such as plastics, fertilizers, fabrics, anti-freeze, and other chemicals. Natural gas can be compressed to form compressed natural gas (CNG) for the use in automobiles as a clean alternative fuel replacing gasoline and diesel. Furthermore, steam reforming of natural gas can be used to make hydrogen.

Hydrogen has various applications. Hydrogen is a clean burning fuel that does not produce any greenhouse gas emissions. Hydrogen is a clean primary feed stock along with carbon monoxide (CO) for the chemical industry, for making clean synthetic diesel, naphtha, Jet A, and lubricants using Fischer Tropsch processes. Hydrogen is also used in hydrogen based-fuel cells to produce electricity.

Natural gas derived from sustainable sources such as cellulose from wood, food waste, sewage or switch grass is considered renewable energy and is now a commodity known as renewable natural gas (RNG). Furthermore, power generation from RNG made from a sustainable source of organic material, rather than fossil fuels, is now being considered as carbon neutral and therefore the cleanest source of carbon-based fuel available.

Generation of these types of natural gas products is becoming more attractive as governments are beginning to provide incentives and subsidies representing the desire for reducing the demand for fossil fuels and decrease the overall emissions from the power sector. Furthermore, by creating energy from these organic waste materials it allows diversion from landfilling. The creation of fuel and energy also minimizes the fugitive GHG emissions from the degradation of these wastes.

Gasification is one process that is commonly used for the conversion of organic- or fossil fuel-based carbonaceous materials. Gasification of coal is a common application. However, commercial coal gasifiers are mainly designed to produce "syngas" which contains a high concentration of carbon monoxide, hydrogen and carbon dioxide and minimize the methane content. Methane and other products can be produced from this syngas but require additional chemical processes. Another issue with gasification is that large quantities of GHGs are produced from the process and require proper carbon sequestration.

Incineration is another waste treatment process which can be used to destroy organic waste materials. Incineration involves the combustion of organic materials at high temperatures converting the material into heat, ash, and flue gas. Depending on the installation, incineration can be used to generate electric power. As a result of the high temperature required for incineration, it can be used to destroy certain hazardous wastes containing pathogens and toxins. Incineration is very capital intensive, expensive to operate and requires large installations. Environmental impacts from incineration are also a concern such as the production of toxic metal oxides, GHGs, NOx, SOx, dioxins and furans.

Anaerobic digestion is a common process used for the treatment of biodegradable waste material such as sewage sludge. Anaerobic digestion involves microorganisms which breakdown the material in the absence of oxygen. The process is used to manage waste and to produce fuel from the volatile hydrocarbons called "biogas" which is considered a renewable energy source. The biogas produced consists mostly of methane, CO₂ and other trace contaminant gases. This biogas can be used directly as a fuel or upgraded to "biomethane". The resulting digestate from the process can be used for landfarming as fertilizer however certain toxic chemicals remain that are currently a regulatory concern. Anaerobic digestors have a high initial capital cost as they require large tanks and other process vessels. Anaerobic digestion also requires long residence times and generally only breaks down the more volatile organic material resulting in diminished gas production and increased residual material compared to other technologies. Furthermore, operating conditions for anaerobic digestion such as pH, temperature, salts, and alkalinity, need to be tightly controlled in order to operate properly.

The following are a group of patents related to commercial attempts at gasification, plasma gasification and steam reforming:
TSANGARIS, Andreas, and Marc BACON, PCT patent application no. WO 2008/138118;
TSANGARIS, Andreas, and Marc BACON, PCT patent application no. WO 2008/138117;
TSANGARIS, Andreas, and Margaret SWAIN, PCT patent application no. WO/2008/117119;
TSANGARIS, Andreas, and Marc BACON, PCT patent application no. WO 2008/104088;
TSANGARIS, Andreas, and Marc BACON, PCT patent application no. WO 2008/104058;
TSANGARIS, Andreas, Margaret SWAIN, Kenneth Craig CAMPBELL, Douglas Michael FEASBY, Thomas Edward WAGLER, Scott Douglas BASHAM, Mao Pei CUI, Zhiyuan SHEN, Ashish CHOTALIYA, Nipun SONI, Alisdair Alan MCLEAN, Geoffrey DOBBS, Pascale Bonnie MARCEAU, and Xiaoping ZOU. PCT patent application no. WO/2008/011213;
TSANGARIS, Andreas, and Margaret SWAIN, PCT patent application no. WO 2007/143673;
TSANGARIS, Andreas, Margaret SWAIN, Kenneth Craig CAMPBELL,
Douglas Michael FEASBY, Thomas Edward WAGLER, Scott, Douglas BASHAM, Zhiyuan SHEN, Geoffrey DOBBS, Mao Pei CUI, and Alisdair Alan MCLEAN, PCT patent application no. WO/2007/131241;
TSANGARIS, Andreas, Margaret SWAIN, Douglas Michael FEASBY, Scott Douglas BASHAM, Ashish CHOTALIYA, and Pascale Bonnie MARCEAU, PCT patent application no. WO 2007/131240;
TSANGARIS, Andreas, Margaret SWAIN, Kenneth Craig CAMPBELL,
Douglas Michael FEASBY, Thomas Edward WAGLER, Xiaoping ZOU, Alisdair Alan MCLEAN, and Pascale Bonnie MARCEAU, PCT patent application no. WO 2007/131239;
TSANGARIS, Andreas, Margaret SWAIN, Douglas Michael FEASBY, Scott Douglas BASHAM, Nipun SONI, and Pascale Bonnie MARCEAU, PCT patent application no. WO 2007/131236;
TSANGARIS, Andreas, Margaret SWAIN, Kenneth Craig CAMPBELL, Douglas Michael FEASBY, Scott Douglas BASHAM, Alisdair Alan McLEAN, and Pascale Bonnie MARCEAU, PCT patent application no. WO 2007/131235;
TSANGARIS, Andreas and Margaret SWAIN. PCT patent application no. WO 2007/131234;
TSANGARIS, Andreas, Kenneth C. CAMPBELL, and Michael D. FEASBY and Ke LI, PCT patent application no. WO 2006/128286;
TSANGARIS, Andreas, Kenneth C. CAMPBELL, Michael D. FEASBY, and Ke LI, PCT patent application no. WO 2006/128285;
TSANGARIS, Andreas V., and Kenneth C. CAMPBELL; PCT patent application no. WO 2006/081661;
TSANGARIS, Andreas V., George W. CARTER, Jesse Z., SHEN, Michael D. FEASBY, and Kenneth C. CAMPBELL, PCT patent application no. WO 2004/072547;
ZWIERSCHKE, Jayson, and Ernest George DUECK, PCT patent application no. WO/2006/076801;
SHETH, Atul C. PCT patent application no. WO/2007/143376.
MELNICHUK, Larry Jack, and Karen (Sue) Venita Kelly. U.S. Pat. No. 7,728,182;
The following are other patents related to hazardous waste destruction:
   Abdullah, Shahid. Method for Degradation of Polychlorinated Biphenyls in Soil. U.S. Pat. No. 5,932,472;
   Almeida, Fernando Carvalho. U.S. Pat. No. 6,767,163;
   Anderson, Perry D., Bhuvan C. Pant, Zhendi Wang, et al. U.S. Pat. No. 5,118,429;
   Baghel, Sunita S., and Deborah A. Haitko. U.S. Pat. No. 5,382,736;
   Balko, Edward N., Jeffrey B. Hoke, and Gary A. Gramiccioni. U.S. Pat. No. 5,177,268;
   Batchelor, Bill, Alison Marie Hapka, Godwin Joseph Igwe, et al. U.S. Pat. No. 5,789,649;
   Bender, Jim. U.S. Pat. No. 6,117,335;
   Boles, Jeffrey L., Johnny R. Gamble, and Laura Lackey. U.S. Pat. No. 6,599,423;
   Bolsing, Friedrich, and Achim Habekost. Process for the Reductive Dehalogenation of Halogenated Hydrocarbons. U.S. Pat. No. 6,649,044;
   Cutshall, Eule R., Gregory Felling, Sheila D. Scott, et al. U.S. Pat. No. 5,197,823;
   Dellinger, Harold Barrett, and John L. Graham. U.S. Pat. No. 5,650,549;
   Driemel, Klaus, Joachim Wolf, and Wolfgang Schwarz. Process for Nonpolluting Destruction of Polychlorinated Waste Materials. U.S. Pat. No. 5,191,155;
   Farcasiu, Malvina, and Steven C. Petrosius. U.S. Pat. No. 5,369,214;
   Friedman, Arthur J., and Yuval Halpern. U.S. Pat. No. 5,290,432;
   Ginosar, Daniel M., Robert V. Fox, and Stuart K. Janikowski. U.S. Pat. No. 6,984,768;
   Gonzalez, Luciano A., Henry E. Kowalyk, and Blair F. Sim. U.S. Pat. No. 6,414,212;
   Gonzalez, Luciano A., Dennis F. Mullins, W. John Janis, et al. U.S. Pat. No. 6,380,454;
   Greenberg, Richard S., and Thomas Andrews. U.S. Pat. No. 6,319,328;
   Levin, George B. U.S. Pat. No. 5,602,298;
   U.S. Pat. No. 5,100,638;
   Newman, Gerard K., Jeffrey H. Harwell, and Lance Lobban. U.S. Pat. No. 6,241,856;
   Potter, Raleigh Wayne, and Michael Fitzgerald. U.S. Pat. No. 6,213,029;
   U.S. Pat. No. 6,112,675;
   Quimby, Jay M. U.S. Statutory Invention Registration H2198 H;
   Reagen, William Kevin, and Stuart Kevin Janikowski. U.S. Pat. No. 5,994,604;
   Rickard, Robert S. U.S. Pat. No. 5,103,578;
   Ruddick, John N. R., and Futong Cui. U.S. Pat. No. 5,698,829;
   Schulz, Helmut W. U.S. Pat. No. 5,245,113;
   Sparks, Kevin A., and James E. Johnston. U.S. Pat. No. 5,695,732; and
   Zachariah, Michael R., and Douglas P. DuFaux. U.S. Pat. No. 5,936,137.

The use of hydrogen to process hazardous wastes such as polychlorinated biphenyls (PCBs) has been contemplated previously. This was termed gas phase reduction. Chemistry and Industry, vol. 102(19), Oct. 3, 1983, pp. 759-760, Letchworth Herts, R. Louw et al., "Thermal Hydrodechlorination of (Poly)Chlorinated Organic Compounds".

U.S. Pat. No. 5,050,511 by Hallett, D.J. and Campbell, K.R. describes the treatment of organic waste material such as halogenated organic compounds using a gas phase chemical reduction. The reaction takes place in a reducing atmosphere at a high temperature above about 600° C, preferably above 875° C. This patent contemplates the injection of liquid wastes, slurries of wastes, and solid wastes that have been pulverized directly into a hot atmosphere containing excess hydrogen. The material then undergoes chemical oxidation with a gaseous oxidizing agent at a temperature above about 1000° C.

U.S. Pat. No. 8,343,241 to Hallett, D.J. and McEwen, C.S. describes a process which focuses on the use of a gas phase reduction process to produce methane rich gas from organic materials.

There is a need for new processes for reducing an organic material to produce methane and/or hydrogen.

This background information is provided for the purpose of making known information believed by the applicant to be of possible relevance to the present invention. No admission is necessarily intended, nor should be construed, that any of the preceding information constitutes prior art against the present invention.

### SUMMARY OF THE INVENTION

Described herein is a process for reducing an organic material to produce methane and/or hydrogen.

In one aspect, there is provided a process for reducing an organic material to produce methane and/or hydrogen comprising: (a) contacting the organic material with an excess amount of hydrogen gas in an enclosed reduction chamber at ambient temperature, wherein an oxygen content of the reduction chamber is less than about 0.10%, and heating the reduction chamber to cause a temperature increase in the organic material from ambient temperature to up to 425°C at a rate of up to about 8°C per minute, under positive pressure, to form a first gaseous mixture comprising methane, hydrogen, acid, and partially reduced volatile organic molecules, wherein the partially reduced volatile organic molecules comprise volatile organic molecules that have not been fully reduced to methane; (b) heating the first gaseous mixture to a temperature of about 675°C to about 875°C in the presence of an excess amount of hydrogen gas to form a second gaseous mixture comprising: methane and/or hydrogen, and acid; wherein, when the process is for production of hydrogen, step (b) further comprises heating the first gaseous mixture in the presence of superheated steam in an enclosed reactor vessel of which an oxygen content is less than about 0.10%, under continuous mixing conditions and in the presence of a catalyst; and (c) neutralizing the second gaseous mixture with a base.

In another aspect, there is provided a process for reducing an organic material to produce methane comprising: (a1) contacting the organic material with an excess amount of hydrogen gas in an enclosed reduction chamber at ambient temperature, wherein an oxygen content of the reduction chamber is less than about 0.10%, and heating the reduction chamber to cause a temperature increase in the organic material from ambient temperature to up to 425°C at a rate of up to about 8°C per minute, under positive pressure, to form a first gaseous mixture comprising methane, hydrogen, acid, and partially reduced volatile organic molecules, wherein the partially reduced volatile organic molecules comprise volatile organic molecules that have not been fully reduced to methane; and (b1) neutralizing the first gaseous mixture with a base.

### BRIEF DESCRIPTION OF THE FIGURES

For a better understanding of the present invention, as well as other aspects and further features thereof, reference is made to the following description which is to be used in conjunction with the accompanying drawings, where:

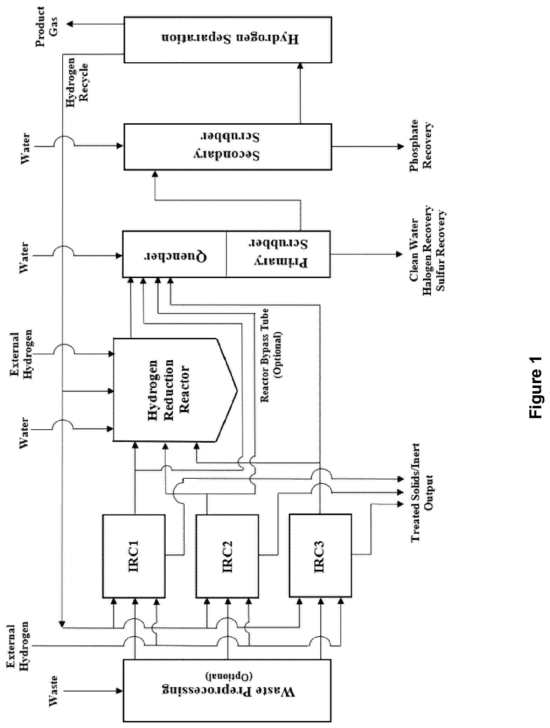

Figure 1 is a schematic diagram of an embodiment of the process of the present disclosure.

### DETAILED DESCRIPTION OF THE INVENTION

The present disclosure relates to the generation of energy from both renewable and non-renewable organic materials.

In particular, the disclosure relates to a process wherein organic molecules are reduced through the use of excess gaseous hydrogen as the reducing agent. Reduction of organic molecules occurs from materials that are in a solid, liquid, or gaseous state. Energy is created primarily in the form of hydrogen, methane, or a combination of the two. Synthetic and renewable natural gas can be produced. The process also provides for the recycling and recovery of metals, elemental carbon, and silica.

### Definitions

Unless defined otherwise, all technical and scientific terms used herein have the same meaning as commonly understood by one of ordinary skill in the art to which this invention belongs.

As used in the specification and claims, the singular forms "a", "an" and "the" include plural references unless the context clearly dictates otherwise.

The term "comprising" as used herein will be understood to mean that the list following is non-exhaustive and may or may not include any other additional suitable items, for example one or more further feature(s), component(s) ingredient(s) and/or elements(s) as appropriate.

Terms of degree such as "substantially", "about" and "approximately" as used herein mean a reasonable amount of deviation of the modified term such that the end result is not significantly changed. These terms of degree should be construed as including a deviation of at least ±5% of the modified term if this deviation would not negate the meaning of the word it modifies.

The term "organic material" as used herein refers to any organic compound(s), biomass, microorganism(s), toxic mixtures or otherwise any carbon-based compound or mixture which can be converted to methane gas. Exemplary organic materials can include organic waste material, biomass, chemical warfare agents, pathogens, and munitions. The term "organic waste material" refers to material which requires treatment before disposal. The treatment of the organic waste material may be required because the material is toxic, infectious, explosive or an environmental pollutant, etc. Examples of organic waste material include, but are not limited to, sewage sludge; municipal and industrial solid waste or garbage; landfill gas; agricultural waste material such as from poultry, cattle, swine or other livestock waste material (such as excrement or rendering wastes); corn and other crops that are contaminated with mold and the associated toxins such as vomitoxin; organic solvents, such as halogenated organic solvents; halogenated organic compounds, such as polychlorinated biphenyls, hexachlorobenzene, chlorinated pesticides, brominated fire retardants, fluorinated propellants or fluorinated refrigerants; organophosphate compounds such as pesticides; tires; plastics such as polyethylene; auto shedder residue (ASR); refinery and chemical manufacturing/processing wastes, for example still bottoms; contaminated soil; fossil fuels such as lignite, sub-bituminous coal, or bituminous coal, bitumen, bitumen containing asphaltene molecules (high in sulfur), crude oil, peat, or bitumen processing waste, for example from tar sands, oil, crude oil, and peat. Organic material also comprises biomass, such as wood waste, paper waste, cardboard waste, wood chips, pulp waste, or agricultural biomass (such as from switch grass, sugar cane residuals, or corn stover or residuals). Organic material also comprises chemical warfare agents such as halogenated or organophosphate chemical warfare agents (such as mustard gas, sulfur mustard, Sarin and VX nerve agent). Organic material also comprises pathogens including viruses or bacteria (such as anthrax or E. coli. Bacteria). Organic material also comprises munitions, such as rockets or shells containing explosive organic material such as 2,4,6-trinitrotoluene (TNT), cyclotrimethylenetrinitramine (RDX), and octahydro-1,3,5,7-tetranitro-1,3,5,7-tetrazocine (HMX) as well as propellants can also be processed provided that strict temperature ranges are adhered to so that the explosive temperatures (detonation temperatures) are avoided.

As used herein, the term "partially reduced volatile organic molecules" refers to volatile organic molecules that have not been fully reduced to methane.

The term "coal" as used herein includes all forms of readily combustible black or brownish sedimentary rock, such as lignite (or brown coal), sub-bituminous coal, and bituminous coal.

The term "substantially free of oxygen" as used herein refers to the conditions used in the process of dehalogenation, desulfurization and Hydrogen Reduction of organic compounds in the absence of oxygen. A benefit of conducting the reactions in the absence of oxygen is to avoid the oxidation of organic compounds and metals which can result in unwanted side products. Accordingly, the oxygen content in the enclosed chamber is less than about 0.10%, optionally less about 0.08%, suitably less than about 0.04% by volume.

The term "excess amount" as used herein refers to an amount of hydrogen gas that is mixed with the organic material that exceeds the amount required for stoichiometry. The excess amount of hydrogen remaining after completion of the reduction reactions is (in mol%) about 5% to about 80%, suitably about 10% to about 55%, more suitably about 15% to about 30%.

The term "mixing" and "sufficiently mixed" as used herein refers to the homogenous mixing of the organic molecules with an excess of hydrogen so that the organic material is completely dehalogenated and reduced by the hydrogen gas. Thorough mixing allows the hydrogen gas to bombard the organic compounds in the organic material from all directions and brings the dehalogenation, desulfurization and reduction reactions to near completion. If the volatilized organic material is not sufficiently mixed with the excess amount of hydrogen gas the compounds in the organic material will not be completely dehalogenated and reduced, resulting in the formation by condensation of aromatic and partial aromatic molecules into a tarry material containing polyaromatic hydrocarbons. Mixing is accomplished by ensuring conditions that produce turbulent flow.

The term "dehalogenate" as used herein refers to a process wherein organic compounds containing halogen atoms, such as iodine, fluorine, chlorine or bromine, react with hydrogen, resulting in loss of the halogen atom from the organic compound and replacement with a hydrogen atom.

The term "desulfurize" as used herein refers to a process wherein organic compounds containing sulfur atoms, react with hydrogen resulting in the loss of the sulfur atom from the organic compound and replacement with a hydrogen atom. The reaction also generates hydrogen sulfide (H₂S).

The term "neutralizing" as used herein means the adjustment of the pH of a solution to approximately neutral (pH 7) or to a pH that is not harmful to the environment or organisms. For example, neutralization of an acidic solution to a pH of about 7 can be done by adding a base to the acidic solution.

The term "vaporized" as used herein refers to a liquid that has been converted to its vapor or gaseous form by the application of heat and hydrogen.

The term "volatilized" as used herein refers to the conversion of large solid or liquid compounds to smaller lighter molecules by Hydrogen Reduction resulting in these lighter molecules forming a gaseous phase.

The term "base" as used herein refers to any compound which is able to neutralize an acidic solution. Examples of bases include, but are not limited to, an alkali metal hydroxide (such as sodium hydroxide or potassium hydroxide), an alkaline earth metal hydroxide, an alkali metal carbonate, or an alkaline earth metal carbonate (such as calcium carbonate).

### Description of Process

Described herein is a process for reducing an organic material to produce methane. The present process was developed by the inventors to address challenges encountered during the use of other processes for reducing organic materials known in the art.

The processes as described herein for reducing organic material to produce methane (which can subsequently be converted to hydrogen, as discussed in further detail herein) can be conducted with a wide variety of feed types, ranging from agricultural materials to sewage waste to autoshredder residue to munitions.

The inventors have surprisingly found that the initial reduction reaction in the processes described herein for reducing organic materials can occur at temperatures up to 425 °C, under positive pressure (i.e. above ambient pressure). This offers the advantage of being able to operate an initial reduction process at lower temperatures than other processes known in the art, which adds to the overall efficiency of the present process.

Furthermore, the inventors have noted that, in practice, personnel conducting processes for reducing organic materials to produce methane can be motivated to quickly ramp the systems/equipment used to carry out such processes to operational temperatures, in order to begin achieving methane production as quickly as possible and increase process throughput. The inventors have observed that this can have the unintentional effect of causing rapid pressure excursions, such as when organic material is heated rapidly to temperature of 450 °C or above. The effect of such rapid pressure excursions can be two-fold. Firstly, such rapid reaction can quickly consume available hydrogen in the process, resulting in incomplete reduction of organic molecules. Secondly, a large pulse of volatilized organic materials can cause unreduced organic molecules to travel rapidly through the system/equipment used to carry out the process and contaminate the desired product(s) of the reduction reaction. In either of these scenarios, consistent production of vaporized organics can be prevented and tar formation can occur (resulting in the need to shut down systems/equipment for regular cleaning, leading to loss of efficiency in the process). However, the present inventors have found that with careful control of temperature including a gradual temperature ramp up to operational temperatures for reduction processes, and preferably also with monitoring and carefully controlling the pressure under which such processes are conducted, such rapid pressure excursions can be reduced or avoided.

The processes described herein are preferably conducted as batch processes, which are particularly well-suited to incorporating the careful temperature control and temperature ramping processes developed by the present inventors. Operating the present processes in batch mode as opposed to continuously can also simplify the equipment needed to conduct the processes, as well as avoid preprocessing steps that may be required for continuously operating processes (which may require a continuous feed of organic material into the process).

Thus, the ability to operate the reduction processes described herein at lower temperatures, in combination with a carefully controlled temperature ramp up to operating conditions, results in a process and system that can operate efficiently and cleanly across a wide variety of starting organic materials. The processes described herein can further account for a range of operator experience having regard to the personnel who are conducting the reduction processes and controlling the equipment used to carry out the steps of the process, in that the processes can be reliably reproduced by various operators of the process in an efficient and safe manner. Finally, the inventors have found that the processes described herein can further reduce the formation of tarry material relative to processes operating at higher temperatures and/or lacking such temperature control/ramping incorporated into the process.

Thus, in one embodiment, there is provided a process for reducing an organic material to produce methane and/or hydrogen comprising: (a) contacting the organic material with an excess amount of hydrogen gas in an enclosed reduction chamber at ambient temperature, wherein an oxygen content of the reduction chamber is less than about 0.10%, and heating the reduction chamber to cause a temperature increase in the organic material from ambient temperature to up to about 425°C at a rate of up to about 8°C per minute, under positive pressure, to form a first gaseous mixture comprising methane, hydrogen, acid, and partially reduced volatile organic molecules; (b) heating the first gaseous mixture to a temperature of about 675°C to about 875°C in the presence of an excess amount of hydrogen gas to form a second gaseous mixture comprising methane and/or hydrogen, and acid; and (c) neutralizing the second gaseous mixture with a base.

An excess of hydrogen must be present for the reduction reaction to occur. If sufficient hydrogen is not present only the most volatile hydrocarbons will be partially reduced and released from solid and liquid phase materials. It has been found that using an Initial Reduction Chamber (IRC), also referred to herein as a reduction chamber, with a flow of excess hydrogen always present, all organic hydrocarbons are reduced and mobilized in a gaseous state from solid and liquid phase materials leaving clean solid metals or minerals, elemental carbon and silica. This reduction reaction can be controlled with temperature and provides optimization of gaseous hydrocarbon production in the form of a controllable and continuous flow of partially reduced gaseous hydrocarbons to the reactor leaving little or no organic residual. Preferably, a continuous flow of heated hydrogen gas is provided to the reduction chamber. In one embodiment, a pipe or tube for supplying hydrogen can extend into the reduction chamber to allow for heating of the hydrogen contained therein prior to release and reaction of the hydrogen with the organic material.

It has been found that reduction of organic material from various sources in solid, liquid, and gaseous states in step (a) can occur in the presence of an excess amount of flowing hydrogen gas. This can be accomplished in a simple low-pressure chamber capable of handling pressures up to 10 atmospheres, and which can be loaded using bins that can be lifted into the chamber with a standard loader or bobcat device.

In step (a), hydrogen is allowed to penetrate the organic material to reduce molecules directly in a solid, liquid and gaseous state as the flowing hydrogen attacks or causes reduction to occur breaking the bonds, particularly the carbon-carbon bonds, the carbon-halogen bonds, and any sulfhydryl bonds. Preferably, a continuous input of fresh hydrogen is provided. This will be collectively known as Hydrogen Reduction. The organic materials should be oriented to allow ready exposure to the hydrogen, and to allow the reduced gaseous organic molecules to be swept away. The volatilized or gaseous organic molecules ultimately react with the excess amount of hydrogen gas to cause further reduction to occur. In addition to methane, hydrogen, acid, and partially reduced volatile organic molecules, the first gaseous mixture may also comprise CO and CO₂.

In one embodiment, step (a) is conducted as a batch process.

In yet another embodiment, the process is performed at a pressure greater than 1 atm, and less than about 5 atm. In one embodiment, the process is performed at a pressure of at least about 2 atm, and less than about 5 atm. In another embodiment, the process is performed at a pressure of from about 2 atm to about 3 atm.

While pressure increases of up to 10 atm may be tolerated by the reduction chamber and other equipment used to carry out the process, in one embodiment, if a rapid pressure rise occurs and/or if a pressure in the reduction chamber approaches about 5 atm, the rate of temperature increase in the organic material is decreased - i.e. the heating of the reduction chamber is decreased. Once the pressure in the reduction chamber stabilizes and/or is less than about 5 atm, or from about 2 atm to about 3 atm, heating the reduction chamber is then resumed to cause the temperature increase in the organic material from ambient temperature to up to 425°C at the rate of up to about 8°C per minute. In one embodiment, a rapid rise of pressure can be a pressure rise of about 1 atm/30 seconds. In a preferred embodiment, the process is performed under positive pressure (i.e. at a pressure that is greater than ambient pressure).

At the point where temperature in step (a) has been ramped to a temperature of 425 ° C, preferably at a pressure of at least about 2 atm and less than about 5 atm, or from about 2 atm to about 3 atm, most of the halogenated aromatic and aliphatic hydrocarbons present in the organic material have been dehalogenated by reduction and hydrogen replacement. Similarly, organic compounds containing sulfur atoms such as the asphaltenes in bitumen are desulfurized in the presence of an excess amount of hydrogen gas.

In another embodiment, the organic material comprises water (for example, sewage sludge), and in step (a) the process further comprises: heating the reduction chamber to cause the temperature increase in the organic material to about 100°C to about 105°C, and holding the temperature of the organic material at about 100°C to about 105°C to evaporate water from the organic material and form steam; and removing the steam from the reduction chamber prior to further increasing the temperature of the organic material. In one embodiment, the steam is removed, such as via a Reactor Bypass Tube, and the organic material is rendered dry before the temperature in step (a) is further increased, and before step (b) and further steps are conducted. By evaporating and removing water (such as via the Reactor Bypass Tube leading to a quencher/primary scrubber), it creates a more efficient process by eliminating the need to pass the moisture through the reactor, heating the water to 875° C and then cooling it back down. This will produce an end product gas which has a high methane content and a low CO and CO₂ content. If further hydrogen can be added economically the maximum yield of methane can be obtained and the CO and CO₂ content either minimized or eliminated. In another embodiment, the process further comprises cooling the steam removed from the reduction chamber (e.g. to a temperature of about 70 ° C) to reform water, neutralizing the water to neutralize any acids present (such as via an acid scrubber), and treating the water to remove any organic molecules and/or metals present. In on embodiment, basic solutions are added to neutralize any acids formed such as sulfuric acid or hydrochloric acid. In another embodiment, treating the water comprises filtering the water through an activated carbon filter.

In another embodiment, step (b) is performed in an enclosed reactor vessel substantially free of oxygen. In yet another embodiment, step (b) is performed under continuous mixing conditions. In still another embodiment, step (b) comprises heating the first gaseous mixture to a temperature of about 750°C to about 850°C. In still yet another embodiment, step (b) comprises heating the first gaseous mixture to a temperature of about 800°C to about 850°C.

The first gaseous mixture is transferred via positive pressure to the enclosed reactor vessel and the first gaseous mixture is heated rapidly to a temperature of about 675° C and as high as about 875° C, if necessary, while thoroughly mixing this gaseous mixture again with an excess amount of hydrogen gas. The complete reduction of organic material occurs in step (b) and can be carried out in the enclosed reactor vessel (also referred to herein as a Hydrogen Reduction Reactor, reactor vessel, or reactor) which is designed to generate turbulent flow of the gases at an elevated temperature, where all organic materials are in a gaseous state and are mixed continuously with excess hydrogen as the reducing agent. The enclosed reactor vessel is maintained under controlled temperature and pressure, resulting in the production of methane. The excess hydrogen reduces the remaining organic molecules to form more methane. The resulting product gas (i.e. second gaseous mixture) should be substantially free of other aromatic molecules and particularly larger organic molecules such as siloxane, naphthalene and benzene. The resulting CO and CO₂ produced can be reacted with excess hydrogen, at lower temperatures around 400° C, in the presence of nickel catalysts to form more methane and water. The resulting hydrogen and methane can then be separated and used commercially. The formation of CO and CO₂ is dependent on the amount of water or steam present which reacts with the methane formed. If the presence of these gases is problematic for any reason, the amount of water in the organic material or the amount of water or steam added should be limited or eliminated. This will limit or eliminate the source of the CO and CO₂ formation. Additional hydrogen can be added from an external source if necessary.

Optionally, additional water or steam can be added to the reactor, in the presence of catalysts, as described further below, to facilitate the formation of hydrogen and CO via the steam-methane reforming reaction, whereby all of the methane present can be reformed to hydrogen, CO and CO₂, The hydrogen can then be separated using commercially available membranes and sold.

The reactor vessel should be designed so that the flow of gas is turbulent throughout the vessel providing continuous mixing. There should be no stagnant areas where unreacted hydrocarbons might build up allowing condensation reactions to occur resulting in the formation of tar. This vessel could be made as a longer tubular structure or in a similar shape to that shown by Hallett and Campbell in U.S. Pat. No. 5,050,511.

The steam will further react with the CO to form CO₂ and more hydrogen via the water-gas shift reaction at these temperatures. Ultimately this will form a second gaseous mixture comprising primarily hydrogen, with lower concentrations of acid, CO, CO₂ and methane. This reduces the requirement for additional hydrogen. Alternatively, additional hydrogen can be added to the reaction from an external source to maximize the production of methane and reduce the production of CO and CO₂, which are greenhouse gases (GHGs) and are undesirable. In such an embodiment, steam or water would not be added to the reactor in order to minimize any potential for CO₂ formation.

This second gaseous mixture can contain trace levels of ionic metals such as mercury, lead, cadmium and arsenic, and halides such as chlorides, fluorides and bromides, as well as sulfur, nitrogen, and ammonium.

This second gaseous mixture is sufficiently mixed with excess hydrogen and is thoroughly heated which speeds the interaction of hydrogen with the other molecules and promotes Hydrogen Reduction to occur. This is intended to substantially eliminate all aromatic or partial aromatic compounds.

In another embodiment, step (b) of the process is conducted in the presence of a catalyst, as noted above. In yet another embodiment, the catalyst is a metal catalyst, wherein the metal is selected from one of more of nickel, copper, iron, nickel alloys, tin (such as powdered tin), chromium and noble metals. In another embodiment, the noble metals are selected from platinum, silver, palladium, gold, ruthenium, rhodium, osmium, and iridium. In yet another embodiment, the catalyst is imbedded in one or more walls of the enclosed reactor vessel. In still another embodiment, the enclosed reactor vessel is constructed of a steel alloy containing nickel. In a preferred embodiment, nickel catalyst is presented to the gaseous organic molecules by constructing the high temperature reactor (vessel or tubular reactor) with steel alloys containing high concentrations of nickel. These metals are commonly known as Hastelloy. In another embodiment, step (b) further comprises heating the first gaseous mixture in the presence of superheated steam to reform hydrogen from the methane which has been created from the reduction reactions.

In another embodiment, the reduction chamber and the enclosed reactor vessel are initially purged with an inert gas, such as nitrogen, to render them substantially free of oxygen. In another embodiment, the level of excess hydrogen is monitored so that it preferably exceeds 10%. In one embodiment, 10% excess hydrogen means that there is at least 10% hydrogen present in the gas measured downstream from the reactor in the process. The hydrogen concentration can be measured by a continuous gas analyser along with methane CO and CO₂. In one embodiment, the gas can be continuously analysed as it exits a scrubber system prior to the hydrogen being separated for recycle. As the skilled worker will appreciate, if the relative concentration of hydrogen in the total gas exiting the scrubber system is 10% or higher, then there must be at least this concentration of excess hydrogen present earlier in the process (such as in the reactor), where the hydrogen is being consumed.

At the temperature in step (b) of about 675° C to about 875° C, the dehalogenated and desulfurized aromatic and aliphatic hydrocarbon compounds in the first mixture will be reduced to methane or other small aliphatic hydrocarbons, as shown for example in Hydrogen Reduction. Sufficient mixing of the organic material with the excess amount of hydrogen gas and, optionally mixing the methane produced with water or steam to internally produce more hydrogen and increase the concentration, ensures that the organic compounds are substantially reduced, and therefore, reduces or avoids the formation of tarry material.

### Hydrogen Reduction

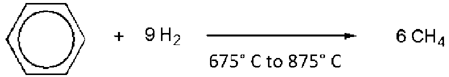

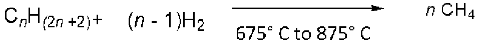

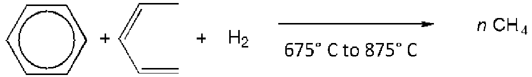

As noted above, the presence of water or steam in step (b) is optional. It is not required if there is a sufficient external source of hydrogen available. The addition of water or steam to step (b) decreases the demand of hydrogen as the water or steam reacts with methane to first form hydrogen and CO through steam-methane reforming (Hydrogen Generation). The water or steam will then further react to produce more hydrogen and CO₂ through the water-gas shift reaction (Hydrogen Generation). Typically, these reactions are performed at an optimal temperature between 700° C and 1100° C. Ultimately four new hydrogen molecules are generated from these reactions while only one molecule of methane is sacrificed. However, depending on the desired levels of CO and CO₂ in the mixture, external hydrogen may be used to minimize the production of CO and CO₂ as they may be undesirable products.

### Hydrogen Generation

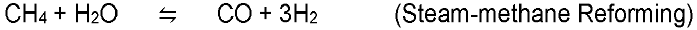

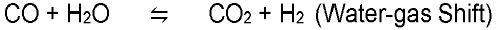

In another embodiment, step (c) comprises neutralizing the second gaseous mixture with a base at a temperature of from about 70°C to about 100°C, or about 85°C, to form a neutralized second gaseous mixture. In yet another embodiment, the base is selected from an alkali metal hydroxide, an alkaline earth metal hydroxide, an alkali metal carbonate, or an alkaline earth metal carbonate. In still yet another embodiment, the base is selected from sodium hydroxide or calcium carbonate. A quencher and primary scrubber can be used to neutralize the second gaseous mixture. As a result of the dehalogenation and/or desulfurization reactions, the acidic by-products are neutralized before the hydrogen gas and methane is separated and purified. This is particularly important to accomplish before the hydrogen gas and methane are separated since membranes made of noble metals used to accomplish this are sensitive to sulfur and other acidic products.

In another embodiment, the process further comprises cooling the neutralized second gaseous mixture. In another embodiment, the neutralized second gaseous mixture is cooled to a temperature of from about 5°C to about 35°C. In still yet another embodiment, the neutralized second gaseous mixture is contacted with a solution comprising potassium permanganate to remove phosphorus containing molecules (as well as ions, including phosphine gas) from the neutralized second gaseous mixture, and a secondary scrubber can be used for this purpose. The potassium permanganate solution removes the phosphorus containing molecules and ions by forming potassium phosphate, which is removed as a salt.

In one embodiment, cooling and/or neutralizing the second gaseous mixture can be conducted in a third vessel with an aqueous solution containing a base such as sodium hydroxide which allows the formation of sodium halides including sodium chloride. Sulfur is also removed to form sodium sulfide and sodium sulfate. Volatile metals such as mercury, lead, arsenic and cadmium will also form halides, such as mercuric chloride. In another embodiment, the third vessel is initially purged with an inert gas, such as nitrogen, to render it substantially free of oxygen.

In another embodiment, steps a), b) and c) of the above-noted process are performed at a pressure greater than 1 atmosphere to about 10 atmospheres, preferably greater than 1 atmosphere to about 5 atmospheres, with a positive pressure always being maintained in the system.

In another embodiment, the process further comprises separating the excess hydrogen from the methane after neutralizing the second gaseous mixture. In still another embodiment, the process further comprises recycling the excess hydrogen to step (a) and/or step (b). The recycled hydrogen may contain amounts of methane, CO and CO₂. In another embodiment, the process of separating the hydrogen from methane is accomplished, first by compressing the neutralized gaseous mixture of c), and sending the compressed gas to a hydrogen separator. In an embodiment, the hydrogen separator is a membrane made of noble metals such as palladium, and separates the gases based on their molecular size, hydrogen being the smallest. In another embodiment, the hydrogen separator is a pressure swing absorption apparatus. In another embodiment of the disclosure, the hydrogen gas separated is transferred for use in an energy-making system including a fuel cell.

The amount of CO and CO₂ produced varies with the moisture content in the organic material and/or water added to the high temperature reactor. In order to minimize the formation of CO and CO₂ in the product gas, the organic material can be pre-dried, or the amount of water present or added should be kept to a minimum. With organic material containing no water, pure hydrogen can be added and CO or CO₂ formation is minimal. Small amounts CO and CO₂ can be converted to methane by adding hydrogen at lower temperatures in the presence of a nickel catalyst but the cost of this process is prohibitive in order to convert larger amounts of CO and CO₂ to methane. In this case removal of these gases from the product gas is necessary to obtain pure methane or hydrogen.

In another embodiment of the disclosure, when the desired product is methane, hydrogen is substantially separated and the remaining gas contains primarily methane.

In another embodiment of the disclosure, the remaining gas, containing primarily methane, is transferred for use in an energy-making system.

In another embodiment of the disclosure, the remaining gas, containing primarily methane, is compressed and can be used as a clean burning fuel. In another embodiment of the disclosure, the methane gas possesses about 0% to about 30% hydrogen, optionally about 5% to about 25% hydrogen, suitably about 10% to about 20% hydrogen by volume.

In another embodiment of the disclosure, the methane is separated from the other gases using commercially available technologies such as membranes or pressure swing absorption. The methane can be separated from the remaining gases (Hydrogen, CO, and CO₂) to form a gas that is 95% to 98% methane.

In a further embodiment of the disclosure, the methane gas produced from the process can be used to generate electricity through the use of gas-powered turbines and steam turbines. In a further embodiment of the disclosure, the methane gas produced can be upgraded, by separating the methane from hydrogen, CO and CO₂, to produce pipeline grade synthetic natural gas (SNG) or renewable natural gas (RNG) to be distributed. These alternative and renewable fuel sources can offset fossil fuels and reduce overall GHG emissions.

In a further embodiment of the disclosure, the process can be used to produce hydrogen, CO, and CO₂ which can be used for chemical synthesis such as Fischer-Tropsch processes.

In another embodiment, the organic material is an organic waste material, a biomass, a chemical warfare agent, a pathogen, or a munition. In another embodiment, the organic waste material comprises sewage sludge; municipal and industrial solid waste or garbage; landfill gas; agricultural waste material; corn and other crops that are contaminated with mold and associated toxins; organic solvents; halogenated organic compounds; organophosphate compounds; tires; plastics; auto shedder residue (ASR); refinery and chemical manufacturing/processing wastes; or fossil fuels. In yet another embodiment, the biomass comprises wood waste, paper waste, cardboard waste, wood chips, pulp waste, or agricultural biomass. In still another embodiment, the chemical warfare agent comprises a halogenated or organophosphate chemical warfare agent, such as Sarin or VX. In another embodiment, the pathogen comprises a virus or a bacterium. In yet another embodiment, the munition comprises rockets or shells containing explosive organic material and/or propellants, such as TNT or RDX (noting that such materials should be processed with careful attention to the temperature so that the molecules are reduced below the temperature of spontaneous cascade causing a conflagration or explosion). In another embodiment, the organic material is as defined in the Definitions section above.

Having regard to the processing of munitions, such as rockets or shells containing explosive organic material, since the melting point of TNT is 80.35 °C and the boiling point is only 295 °C, those of skill in the art will appreciate that hydrogen reduction of TNT itself and the products of rearrangement of the activated molecule can occur without coming close to the detonation temperature of TNT which is 502.22 °C (936 °F). However, if the TNT is melted into a liquid state that was used to fill the shell, this TNT can be destroyed at lower temperatures while being reduced by gaseous hydrogen. RDX and HMX are preferred explosives to TNT in that they are far less sensitive to impact or friction. The melting point of RDX is 205 °C and the explosive temperature is 260 °C. Therefore, those of skill in the art will appreciate that RDX will reduce at temperatures above 205 °C, but must be kept well below 260 °C to prevent explosion. The melting point of HMX is 276 °C, which is above the explosive point of RDX. Those of skill in the art will appreciate that running high concentrations of HMX with RDX should generally be avoided, for these reasons. The explosive temperature of HMX is however much higher at 375 °C.

In another embodiment of the disclosure, the organic material also contains inorganic material such as fixed carbon, elemental carbon, silica, glass, and precious and non-precious metals such as tin, zinc and lead, which do not volatilize, and are kept in either a reduced or native form. In an embodiment of the disclosure, the inorganic materials are removed from the reduction chamber as a particulate after cooling the material before exposing it to air. In an embodiment of the disclosure, the temperature of this inorganic material, after cooling, must be lower than the point of ignition of all of the metals present, otherwise they will ignite when exposed to oxygen in the ambient air.

In another embodiment, there is provided a process for reducing an organic material to produce methane comprising: (a1) contacting the organic material with an excess amount of hydrogen gas in an enclosed reduction chamber at ambient temperature, wherein an oxygen content of the reduction chamber is less than about 0.10%, and heating the reduction chamber to cause a temperature increase in the organic material from ambient temperature to up to about 425°C at a rate of up to about 8°C per minute, under positive pressure, to form a first gaseous mixture comprising methane, hydrogen, acid, and partially reduced volatile organic molecules; and (b1) neutralizing the first gaseous mixture with a base. In one embodiment, the organic material is bitumen. In yet another embodiment, step (a1) is conducted as a batch process. In still another embodiment, the process is performed at a pressure greater than about 1 atm, and less than about 5 atm. In one embodiment, the process is performed at a pressure of at least about 2 atm, and less than about 5 atm. In another embodiment, the process is performed at a pressure of from about 2 atm to about 3 atm.

As noted above for step (a), while pressure increases of up to 10 atm may be tolerated by the reduction chamber and other equipment used to carry out the process, in one embodiment of step (a1), if a rapid pressure rise occurs and/or if a pressure in the reduction chamber approaches about 5 atm, the rate of temperature increase in the organic material is decreased - i.e. the heating of the reduction chamber is decreased. Once the pressure in the reduction chamber stabilizes and/or is less than about 5 atm, or from about 2 atm to about 3 atm, heating the reduction chamber is then resumed to cause the temperature increase in the organic material from ambient temperature to up to 425°C at the rate of up to about 8°C per minute. In one embodiment, a rapid rise of pressure can be a pressure rise of about 1 atm/30 seconds. In one embodiment, the process is performed under positive pressure (i.e. at a pressure that is greater than atmospheric pressure). As noted for step (a) above, preferably, a continuous flow of heated hydrogen gas is provided to the reduction chamber. In one embodiment, a pipe or tube for supplying hydrogen can extend into the reduction chamber to allow for heating of the hydrogen contained therein prior to release and reaction of the hydrogen with the organic material.

In yet another embodiment, step (b1) comprises neutralizing the first gaseous mixture with a base at a temperature of from about 70°C to about 100°C, or about 85°C, to form a neutralized first gaseous mixture. In another embodiment, the base is as defined above. In another embodiment, the process further comprises cooling the neutralized first gaseous mixture. In yet another embodiment, the neutralized first gaseous mixture is cooled to a temperature of from about 5°C to about 35°C. In still yet another embodiment, the neutralized first gaseous mixture is contacted with a solution comprising potassium permanganate to remove phosphorus containing molecules from the neutralized first gaseous mixture. In another embodiment, the organic material is bitumen and the temperature increase in the organic material is from ambient temperature to up to about 400°C. In another embodiment, the organic material is bitumen, the first gaseous mixture comprises a lighter fraction of synthetic crude oil, and step (a1) produces a non-volatile product comprising synthetic crude oil. In yet another embodiment, the process further comprises separating the excess hydrogen from the methane and the lighter fraction of synthetic crude oil after neutralizing the first gaseous mixture. In still yet another embodiment, the process further comprises recycling the excess hydrogen to step (a1) and/or step (b1).

In another embodiment, the organic material is to be only partially reduced to form smaller organic molecules. As an example, the organic material can be Alberta bitumen, which can be treated with Hydrogen Reduction to form a synthetic crude type product which is less viscous (i.e. a flowable oil type product). Bitumen found in the Alberta oil sands can be treated with Hydrogen Reduction to break the large asphaltene sulfur containing molecules which cause this material to be viscous and slow moving in pipelines. Thus, the large sulfur containing asphaltene molecules will be reduced and the majority of sulfur removed. What distinguishes bitumen from conventional petroleum is the small concentration of low molecular weight hydrocarbons present and the abundance of high molecular weight polymeric materials. The latter are amorphous solids which are dissolved in colloidal form in the lower molecular weight liquid constituents, endowing the bitumen with a viscous, syrupy consistency. The high molecular weight solids are soluble in liquid aromatics such as benzene or toluene and insoluble in low molecular weight paraffins and therefore can be separated from the bitumen by n-pentane precipitation from a benzene solution of the bitumen. The solids precipitated in this fashion are called asphaltenes.

Most asphaltenes are rich in heteroatoms, oxygen, nitrogen and especially sulfur. The asphaltene content of the Alberta oil sand bitumen (AOSB) is in the 16-25% range and the asphaltene contains ~80% carbon; 8.0% hydrogen; 8-9% sulfur, 2.5% oxygen; and 1.0% nitrogen. The main difficulty associated with underground recovery of the AOSB is the consequence of the extremely high viscosity of the bitumen for which the asphaltene is mainly responsible.

In the case of Alberta bitumen, Hydrogen Reduction can be used as a Soft Cracker which will create a relatively small amount of methane from the bitumen. This methane can be reformed into hydrogen to create more process gas. This hydrogen can be used to react with the predominately large molecules in the asphaltene of the bitumen. The asphaltene is held together with sulfur and hydrogen bonds and simple cyclic molecules, which are susceptible to Hydrogen Reduction. Essentially the large molecules of the asphaltene will be made into smaller aromatic molecules, which will lower the viscosity in the bitumen and create a free-flowing liquid oil. The larger molecules cannot reform. The high sulfur can also be removed at this stage.

The bitumen is heated in the presence of hydrogen in the IRC. As the IRC is heated to up to 400° C, the gaseous hydrocarbons evolving and the acid gases, particularly H₂S, are moved directly to a quencher, and not reacted at high temperatures with further excess hydrogen. This can be accomplished by use of a Reactor Bypass Tube, for example. The quencher/primary scrubber can condense the lighter fraction of synthetic crude oil and remove the high amounts of sulfur that have been removed from the bitumen by breaking up the asphaltene molecule The liquid remaining in the bins in the IRC is removed as synthetic crude oil, and the viscosity of this product will be decreased compared to the feed and would be defined by the peak temperature and pressure in the IRC. The liquid material condensed in the scrubber, as noted above, will be a lighter fraction of synthetic crude oil more similar to Bunker C or diesel. This liquid can be separated from the aqueous scrubber water and caustic solutions using a standard oil water separator. The pipeline would transport only hydrocarbons derived from the original bitumen without requiring dilution which is currently required for transportation. This will add considerable value and should be very cost effective.

It should be noted that, in some embodiments, step (a) of the above-noted processes could comprise heating the reduction chamber to cause a temperature increase in the organic material from ambient temperature to up to about 600°C, if desired, at a rate of up to about 8°C per minute; however, as noted above, it has been found by the present inventors that operating at such high temperatures is unnecessary, as the process can operate more efficiently at lower temperatures.

Additionally, it has been found that the processes described herein can be successfully run using two or more IRCs to provide a continuous stream of gaseous organic molecules (i.e. first gaseous mixture as described herein) to a single reactor to be further reduced. IRCs can be sequenced in a way to begin to introduce a new loading of gaseous organic molecules from an IRC as a previous load is processed to completion. The sequencing time is indicated by a pressure drop in the reactor as a result of diminishing gaseous organic molecules entering the reactor. The use of multiple IRCs still requires ramping of temperature during the initial reduction and volatilization of the organic material in step (a)/(a1) of the process. As previously noted, this allows for the control of pressure in the IRC and the reactor vessel to ensure complete reduction occurs and minimizes tar formation in the process. The use of IRCs allows for a simple means of loading the organic material as well as unloading the residual inorganic materials for reuse. The use of IRCs for Hydrogen Reduction is practical and eliminates the need to introduce organic material into a single vessel on a continuous basis which requires moving parts to be used inside the hydrogen atmosphere, and/or the requirement to seal hydrogen in a moving vessel.

### Exemplary Process and System for Reducing Organic Material to Produce Methane Gas

Referring to FIG. 1, a block flow diagram of the overall process is illustrated. In an embodiment, before being processed, and depending on the nature of the organic material, the organic material is pretreated. In FIG. 1, the exemplary organic material is illustrated as being organic waste material. In an embodiment, the organic material is pretreated (preprocessed) to form a uniform feed with a high surface area. This pretreatment may include chipping, grinding or shredding the organic material or any other methods which are known to those skilled in the art. In a further embodiment, when the organic material comprises water, it is optionally pre-treated to remove the water before being processed.

In another embodiment, the organic material is placed into open containers which are inserted into the Initial Reduction Chambers or IRCs. In another embodiment, where pre-treatment of the waste is not desired, the moisture content of the material can be reduced by initially ramping the temperature in the IRC from ambient to about 105° C (at a rate of up to about 8°C per minute). In another embodiment, the water in the organic material is turned to steam and sent directly to the scrubber via the Reactor Bypass Tube making pre-drying the organic material not necessary. In another embodiment, the organic material is placed on long trays, which are inserted into an IRC, such that the waste on the tray can be exposed to both heat and an excess of hydrogen gas evenly. In a further embodiment, when the organic material is relatively uniform and flowable, for example sewage sludge with a low solids content, the material is metered and pumped to the trays in the IRC using a sludge pump.

In an embodiment, one or more IRCs (three being shown in FIG. 1) are loaded with organic material and the vessel is then sealed and purged of air with an inert gas such as nitrogen, or argon through an inlet. The purging allows the process to be conducted in an environment which is substantially free of oxygen. In an embodiment, an excess of hydrogen is added to the IRC as the temperature is ramped up from ambient temperature to 425 ° C at a rate of up to 8° C per minute, under positive pressure. A person skilled in the art would be able to determine the temperature necessary to vaporize the organic material and begin the dehalogenation, desulfurization and reduction reactions, which will depend to some extent on the nature of the material. An excess amount of hydrogen is added to the vessel and maintained so an excess amount of hydrogen is leaving the vessel at the outlet. The hydrogen is consumed as the molecules are reduced and therefore hydrogen is continuously added during this process. Organic molecules, which are present in a solid, liquid or gaseous state, are reduced directly and create a gaseous organic mixture as the molecules become smaller. These gaseous organic molecules are continuously reduced, dehalogenated and desulfurized while they travel through the IRC.

It has been found that this process can be successfully run using IRCs to provide a continuous stream of gaseous organic molecules to a single reactor to be further reduced. The use of IRCs also allows for ramping of temperature during the initial reduction and volatilization of the organic material. This also allows for the control of pressure in the IRC and the reactor vessel to ensure complete reduction occurs and minimizes tar formation in the process. The use of IRCs allows for a simple means of loading the organic material. The use of IRCs also allows for a simple means of unloading the residual inorganic materials which are not reduced and volatilized. The inorganic materials are primarily elemental carbon, silica, metals, and glass suitable for recycling. The use of IRCs for Hydrogen Reduction is practical and eliminates the need to introduce organic material into a single vessel on a continuous basis. IRCs allow for control of pressure spikes by monitoring and controlling temperature ramping. Temperature ramping (at a rate of up to about 8°C per minute) is essential for efficiency and the prevention of pressure spikes which can result in tar formation in the reactor and scrubber.

In a further embodiment, the reduced and volatilized organic molecules are conveyed from the IRC to a second vessel, called the Hydrogen Reduction Reactor. In an embodiment, the combined process gas and hydrogen gas enters the inlet of the reactor where they are further mixed with additional excess hydrogen which is added using various injectors and nozzles. In an embodiment, the reactor is designed so that the gas flow is turbulent which is characterized by eddies and vortices that are present throughout the entire field of flow. In an embodiment, the turbulent gas flow helps to thoroughly mix the organic compounds in the organic material with the excess amount of hydrogen gas. As described, the thorough mixing of the organic compounds with the excess amount of hydrogen gas reduces all molecules forming methane and completely removes any aromatic molecules.

In another embodiment, the reactor vessel is exposed to high temperatures, corrosive chemicals such as halogenated compounds, halogens, sulfur, phosphorous and heavy metals, and also a reducing environment as result of the hydrogen gas stream. Accordingly, in some embodiments of the disclosure, the materials used to construct the reactor vessel consist of high temperature and corrosion resistant chromium nickel superalloys such as 253MA^{®}, Hastelloy^{®} X or Haynes^{®} 188.

In a further embodiment, the mixture is further heated and mixed with water or steam in the presence of catalysts such as nickel which is present in the metal vessel walls of the reactor to convert the methane being produced to hydrogen and CO gas via steam-methane reforming. The CO further reacts to produce more hydrogen and CO₂ via the water-gas shift reaction. This is desirable particularly if the final product is to be hydrogen.

In some embodiments, the process of the present disclosure is performed in the presence of a catalyst. In a further embodiment, the catalyst is a metal catalyst wherein the metal is selected from one or more of nickel, copper, iron, nickel alloys, tin (suc as powdered tin), chromium, and noble metals. In another embodiment, the noble metals are selected from one or more of platinum, silver, palladium, gold, ruthenium, rhodium, osmium, and iridium. In an embodiment, the reactor vessel, is composed of the metals such as nickel which catalyze the process as noted above.

In an embodiment of the disclosure, the reactor includes a heating zone and a reduction zone. The heating zone is defined as the volume required to heat the combined gas to a temperature effective for the complete reduction reactions to occur in the reduction zone. The reduction zone is defined as the volume where there is sufficient residence time for complete reduction of gaseous organic molecules to occur as a result of sufficient heating and mixing with excess hydrogen.

In an embodiment, the residence time in the reduction zone is about 1 to about 10 seconds, optionally about 1 to about 5 seconds, suitably about 2 to about 4 seconds. In another embodiment of the disclosure, the gaseous mixture produced from the reduction reaction travels up the central tube of the process reactor.

In another embodiment, the process reactor is heated using one or more radiant tube type heaters located in the annular heating zone. In an embodiment, the radiant tube heaters are gas fired or electric. In another embodiment, the radiant heaters are connected to the process reactor in a zone at the top of the process reactor that is filled with an inert gas such as nitrogen, argon, or carbon dioxide. This design ensures that the outside air cannot leak into the process reactor if a leak forms in the radiant tubes.

In another embodiment of the disclosure, the process reactor comprises an insulated vessel consisting of an outer shell made of, for example, carbon steel, with a floating liner made of, for example, a nickel alloy. The floating liner allows for movement due to thermal expansion as a result of the high temperatures in the process reactor. In a further embodiment, the process reactor also possesses insulation material, such as, ceramic fiber to help maintain the high temperatures in the process reactor. In another embodiment, the floating liner and radiant tube heaters are constructed of materials which can withstand the high temperature reducing environment in the process reactor, in addition to withstanding chemicals such as halogens including chlorine and fluorine, halogenated compounds, sulphur, phosphorous, and heavy metals. In an embodiment, the floating liner and radiant tube heaters are constructed of high temperature and corrosion resistant chromium nickel superalloys such as Kanthal APM^{®}, 253MA^{®}, Hastelloy^{®} X, or Haynes^{®} 188. In another embodiment, the process reactor includes a removable bottom plug to allow for access into the process reactor vessel during shutdowns for inspection, maintenance, and cleaning.

In another embodiment of the disclosure, the process reactor comprises a tubular process reactor design consisting of several tubes heated externally rather than a large vessel with internal heating elements. These tubes can be made from the chromium nickel alloys described above, such as Hastelloy.

In another embodiment, the gaseous mixture then enters a quencher and primary scrubber. In an embodiment, the initial quencher includes a water spray which quickly cools the gaseous mixture from 875° C to a temperature of about 100° C to about 300° C. In a further embodiment, the cooled gaseous mixture travels through a pipe to a venturi scrubber. In the venturi scrubber, water is atomized into small droplets by the turbulence in the throat greatly improving the contact between the gaseous mixture and the water. The quencher and scrubber remove heat, water, particulate matter and acid gases from the gaseous mixture which develop as by products from the dehalogenation and reduction reactions of halogenated compounds (particularly chlorinated, fluorinated, or brominated compounds) and sulfur compounds.

In an embodiment of the disclosure, the acid gases such as halogens and sulfur as ions or as hydrides are neutralized by adding bases such as sodium or calcium hydroxide. The addition of a base results in the production of water and salts of the halogens and sulfur such as sodium chloride or sodium bromide or calcium sulfate.

In another embodiment, the water added to the venturi scrubber is collected at the bottom of the scrubber and exits as water stream. **In** a further embodiment, water from the quencher also joins the water stream. In a further embodiment, the water stream containing scrubber effluent goes to a water treatment system for filtration with activated carbon and testing prior to collection.

In another embodiment, the gas stream exits the scrubber vessel and enters a secondary scrubber. In another embodiment of the disclosure, the gas stream enters a secondary scrubber, where the processed gas is scrubbed again to further reduce the temperature of the processed gas and remove as much water as possible from the processed gas. In another embodiment, the processed gas is cooled by a chilled water spray to a temperature of about 5° C to about 35° C. In another embodiment, the secondary scrubber includes a demister element which eliminates the possibility of carry-over of water droplets in the secondary scrubber process gas stream. In a further embodiment, the secondary scrubber process gas stream exits through a pipe near the top of the secondary scrubber. In this embodiment, water collected in the secondary scrubber discharges as a water stream through a pipe located at the bottom of the secondary scrubber and the water stream containing scrubber effluent goes to a water treatment system for filtration with activated carbon and testing prior to collection.

In another embodiment of the disclosure, a secondary scrubber is further used to remove undesirable compounds, for example, phosphorous containing molecules and ions including phosphine gas. In a further embodiment, a potassium permanganate solution is used in the secondary scrubber to remove the phosphorus containing molecules and ions forming potassium phosphate which is removed as a salt.

In an embodiment of the disclosure, water is a by-product of the reactions occurring in the process reactors, and exits the process from the primary scrubber and from the secondary scrubber. This water is combined and tested before collection and distribution as a clean water source. If this water does not meet discharge criteria it is treated with activated carbon. This carbon can be re-activated in the Hydrogen Reduction process.

In a further embodiment, the gaseous mixture, now predominantly comprises hydrogen and methane, exits the scrubber system and is compressed. In another embodiment, the compressed mixture then enters a separator, such as a hydrogen separator. In an embodiment, the hydrogen separator is a membrane type separator, made of noble metals, and separates the gases based on their molecular size, hydrogen being the smallest. The separator separates the hydrogen gas from the gaseous mixture with about 85% efficiency to form two separate gas streams. In an embodiment, the recovered hydrogen gas stream, which may contain methane, CO, and CO₂, is recycled back into the process to either the IRC or the Hydrogen Reduction Reactor. In another embodiment, the recovered hydrogen gas stream is used as a fuel or in an energy making system such as a fuel cell. In another embodiment, the hydrogen separator is a pressure swing absorption apparatus.

In another embodiment, the remaining gas stream consists of primarily methane which can be further separated in order to create a gas consisting of about 95% methane or greater. The remaining gas stream may contain amounts of hydrogen, CO and CO₂. In an embodiment, the further separation is performed using membranes or pressure swing absorption. In an embodiment, the product gas containing primarily methane can be used as a clean burning fuel. In another embodiment, the product gas containing primarily methane can be injected into natural gas pipelines for distribution as a synthetic natural gas (SNG) or renewable natural gas (RNG) depending on the feed type. In another embodiment, when the desired product is hydrogen, the gas exiting the hydrogen separator consists of primarily CO₂ with some methane and CO.

In an embodiment, organic material is processed using Hydrogen Reduction as described, to form a product gas comprised of primarily hydrogen which can be used to power hydrogen fuel cells or as a hydrogen fuel source. In another embodiment, organic material is processed using Hydrogen Reduction as described, to form a product gas comprised of primarily methane which can be used as a fuel or can be injected into distribution pipelines as synthetic natural gas (SNG) or as renewable natural gas (RNG).

### EXAMPLES

To gain a better understanding of the invention described herein, the following examples are set forth. It should be understood that these examples are for illustrative purposes only. Therefore, they should not limit the scope of this invention in any way.

### Example 1 - Process Modelling

Two embodiments of the present disclosure are described below to provide examples of the production of methane from the conversion of two specific organic materials. The following examples are based on known chemical compositions of these materials. This information is combined with standard engineering calculations as well as process modeling of the chemical reactions. The chemical reactions have been previously described. The calculations assume that hydrogen is added as a reactant. The following efficiencies for hydrogen separation are used: 85% hydrogen recovery, 92% methane rejection, 100% CO rejection, 50% CO₂ rejection, and 100% water rejection.

In an embodiment, polyethylene-based waste plastic such as Auto Shredder Residue (ASR) is converted to methane or synthetic natural gas (SNG). This material is placed in bins which are placed directly into the Initial Reduction Chambers (IRCs). ASR has the following chemical composition (in mole%) on a dry basis: 2.2% nitrogen, 53.6% carbon, 16.4% oxygen, 6.6% hydrogen and 21.2% ash. The process was modelled using an excess of hydrogen of 10 mol% after the completion of the Hydrogen Reduction reactions. The conditions of operation used in the model were: the Reduction Chamber is run with a ramp rate of 8 °C /min from ambient temperature to 425 °C, as measured in the substrate, and the vessel is kept within a pressure range of 1 atm to 5 atm (with positive pressure being maintained). According to the model, the gas produced is transferred at 425 °C into the Reactor where a continuous supply of hydrogen is added to maintain a measured excess concentration of 10% hydrogen (which as noted above can be determined by ensuring at least 10% hydrogen is present in the gas exiting the scrubber system prior to the hydrogen being separated for recycle), and the reactor is run at 850 °C. The moisture content of ASR is typically between 5% and 25%. In addition to polyethylene, ASR may contain DEHP (diethyl hexyl phthalate) and brominated fire retardants. The expected output gas had the following chemical composition: 51.7% methane, 38.5% CO₂, 8.2% CO, and 1.6% hydrogen. The conversion of 1 dry tonne of ASR produces an output gas with a higher heating value of 28.7GJ. According to the model, the solid residue remaining is expected to contain elemental carbon, silica, shards of glass and metal including zinc. DEHP and brominated fire retardants and any trace amounts of PCBs are expected to be destroyed. Tar formation throughout the process is expected to be substantially absent. The methane in this output gas can be separated from the other components to produce a gas that is 95% methane or greater and suitable for distribution in natural gas pipelines as SNG.

In another modelled process, digested sewage sludge is converted to methane or renewable natural gas (RNG). This material is placed in trays which are placed directly into the Initial Reduction Chambers (IRCs). Digested sewage sludge has the following chemical composition (in mole%) on a dry basis: 4.7% nitrogen, 34.0% carbon, 20.0% oxygen, 4.9% hydrogen, 1.3% sulfur, 0.1% chlorine, and 35.0% ash. The process was modelled using an excess of hydrogen of 10 mol% after the completion of the Hydrogen Reduction reactions (which as noted above can be determined by ensuring at least 10% hydrogen is present in the gas exiting the scrubber system prior to the hydrogen being separated for recycle). The moisture content of digested sewage sludge is typically between 70% and 80%. According to the model, this sewage sludge is ramped first from ambient temperature to 105 °C at 8 °C /min, and a reactor bypass valve is open to allow the water from the sludge in the form of steam to be captured in the scrubber and quenched to 30 °C, forming water again. According to the model, when the sludge is substantially free of water and the evaporation is no longer consuming the energy from heating the temperature is ramped at 8 °C/minute until a maximum temperature of 425 °C is reached in the sludge, and this vessel was kept at a pressure of 1 atm to 5 atm (with positive pressure being maintained). The gas produced was transferred at 425 °C to the reactor which was run at 850 °C. Additional hydrogen can be added to the reactor to maintain an excess concentration of 10% hydrogen in the reactor gas as noted above. The expected output gas had the follow chemical composition: 45.2% methane, 43.3% CO₂, 9.2% CO, and 2.4% hydrogen. The conversion of 1 dry tonne of digested sewage sludge is expected to produce an output gas with a higher heating value of 20.4GJ. The methane in this output gas can be separated from the other components to produce a gas that is 95% methane or greater and suitable for distribution in natural gas pipelines as RNG.

### Example 2 - Comparative Example - PCB destruction

Bins of Electrical capacitors were placed in a reduction chamber and run as follows:

The chamber was urged with nitrogen to remove the oxygen containing air and then hydrogen was introduced. As the hydrogen was introduced the chamber was heated externally with natural gas fired heating tubes so that the temperature of the vessel reached 600 °C as rapidly as possible. As the temperature measured by thermocouples placed inside the vessel on the inner wall reached 550 °C, the chamber rapidly filled with gaseous hydrocarbons resulting in a rapid pressure surge in both the reduction chamber, the reactor (at 850 °C), and the scrubber. The burners were turned down immediately and the pressure surge was brought under control within one minute. Then the chamber was again heated in order to maintain a constant but manageable production of gas flowing into and through the reactor and into the scrubber system. This resulted in visible tar formation throughout the scrubber system which required thorough cleaning at least every 28 days. Raising the reactor temperature to 875 and 900 °C had little or no effect on this tar formation.

### Example 3 - Production of methane from dry wood chips

Example of dry wood chips run following a ramping of the reduction chamber at 8 °C / minute from ambient to 450 °C. Containers made with steel mesh were filled with dry wood chips and placed inside a sealed chamber. This chamber was purged of air with nitrogen and placed into an electrically heated oven apparatus. Hydrogen was added at a constant rate and the temperature was ramped at a constant rate of 8 °C /minute to 450 °C at 1 atm pressure. Methane gas began to be detected after the scrubber when the temperature reached 80 °C. The concentrations of methane gradually increased as the temperature rose and the concentrations of hydrogen decreased corresponding to the production of methane with the highest concentrations being reached between 400 and 420 °C. When 450 °C was reached the ramp rate was stopped since no further methane was being produced. No tar was formed in the scrubber or any other part of the reactor system.

## Claims

1. A process for reducing an organic material to produce methane and/or hydrogen comprising:
(a) contacting the organic material with an excess amount of hydrogen gas in an enclosed reduction chamber at ambient temperature, wherein an oxygen content of the reduction chamber is less than about 0.10%, and heating the reduction chamber to cause a temperature increase in the organic material from ambient temperature to up to 425°C at a rate of up to about 8°C per minute, under positive pressure, to form a first gaseous mixture comprising methane, hydrogen, acid, and partially reduced volatile organic molecules, wherein the partially reduced volatile organic molecules comprise volatile organic molecules that have not been fully reduced to methane;
(b) heating the first gaseous mixture to a temperature of about 675°C to about 875°C in the presence of an excess amount of hydrogen gas to form a second gaseous mixture comprising:
methane and/or hydrogen, and
acid;
wherein, when the process is for production of hydrogen, step (b) further comprises heating the first gaseous mixture in the presence of superheated steam in an enclosed reactor vessel of which an oxygen content is less than about 0.10%, under continuous mixing conditions and in the presence of a catalyst; and
(c) neutralizing the second gaseous mixture with a base.

2. The process of claim 1, wherein the process is performed at a pressure greater than about 1 bar (1 atm), and less than about 5 bar (5 atm);
optionally, wherein the process is performed at a pressure of: at least about 2 bar (2 atm), and less than about 5 bar (5 atm); or from about 2 bar (2 atm) to about 3 bar (3 atm).

3. The process of claim 1, wherein, in step (a) the process further comprises:
decreasing the heating of the reduction chamber if a rapid pressure rise occurs and/or if a pressure in the reduction chamber approaches about 5 bar (5 atm).

4. The process of any one of claims 1-3, wherein the organic material comprises water, and in step (a) the process further comprises:
heating the reduction chamber to cause the temperature increase in the organic material to about 100°C to about 105°C, and holding the temperature of the organic material at about 100°C to about 105°C to evaporate water from the organic material and form steam; and
removing the steam from the reduction chamber prior to further increasing the temperature of the organic material;
optionally, wherein the process further comprises cooling the steam removed from the reduction chamber to reform water, neutralizing the water to neutralize any acids present, and treating the water to remove any organic molecules and/or metals present, wherein treating the water optionally comprises filtering the water through an activated carbon filter.

5. The process of any one of claims 1-4,
wherein the catalyst is a metal catalyst, wherein the metal is selected from one or more of nickel, copper, iron, nickel alloys, tin, chromium and noble metals; optionally, wherein the catalyst is imbedded in one or more walls of the enclosed reactor vessel, wherein the enclosed reactor vessel is optionally constructed of a steel alloy containing nickel.

6. The process of any one of claims 1-5, wherein step (b) comprises heating the first gaseous mixture to a temperature of about 750°C to about 850°C, or about 800°C to about 850°C.

7. The process of any one of claims 1-6, wherein step (c) comprises neutralizing the second gaseous mixture with a base at a temperature of from about 70°C to about 100°C, or about 85°C, to form a neutralized second gaseous mixture;
optionally, wherein the base is selected from an alkali metal hydroxide, an alkaline earth metal hydroxide, an alkali metal carbonate, or an alkaline earth metal carbonate, wherein the base is optionally selected from sodium hydroxide or calcium carbonate, the process optionally further comprising cooling the neutralized second gaseous mixture, wherein the neutralized second gaseous mixture is optionally cooled to a temperature of from about 5°C to about 35°C;
optionally, wherein the neutralized second gaseous mixture is contacted with a solution comprising potassium permanganate to remove phosphorus containing molecules from the neutralized second gaseous mixture.

8. The process of any one of claims 1-7, further comprising separating the excess hydrogen from the methane after neutralizing the second gaseous mixture, the process optionally further comprising recycling the excess hydrogen to step (a) and/or step (b).

9. The process of any one of claims 1-8, wherein the organic material is an organic waste material, a biomass, a chemical warfare agent, a pathogen, or a munition;
optionally, wherein the organic waste material comprises sewage sludge;
municipal and industrial solid waste or garbage; landfill gas; agricultural waste material; corn and other crops that are contaminated with mold and associated toxins; organic solvents; halogenated organic compounds; organophosphate compounds; tires; plastics; auto shedder residue (ASR); refinery and chemical manufacturing/processing wastes; or fossil fuels;
optionally,
wherein the biomass comprises wood waste, paper waste, cardboard waste, wood chips, pulp waste, or agricultural biomass;
wherein the chemical warfare agent comprises a halogenated or organophosphate chemical warfare agent;
wherein the pathogen comprises a virus or a bacterium; and/or
wherein the munition comprises rockets or shells containing explosive organic material and/or propellants.

10. A process for reducing an organic material to produce methane comprising:
(a1) contacting the organic material with an excess amount of hydrogen gas in an enclosed reduction chamber at ambient temperature, wherein an oxygen content of the reduction chamber is less than about 0.10%, and heating the reduction chamber to cause a temperature increase in the organic material from ambient temperature to up to 425°C at a rate of up to about 8°C per minute, under positive pressure, to form a first gaseous mixture comprising methane, hydrogen, acid, and partially reduced volatile organic molecules, wherein the partially reduced volatile organic molecules comprise volatile organic molecules that have not been fully reduced to methane; and
(b1) neutralizing the first gaseous mixture with a base.

11. The process of claim 10, wherein the process is performed at a pressure of greater than about 1 bar (1 atm), and less than about 5 bar (5 atm);
optionally, wherein the process is performed at a pressure of: at least about 2 bar (2 atm), and less than about 5 bar (5 atm); or from about 2 bar (2 atm) to about 3 bar (3 atm).

12. The process of claim 10, wherein, in step (a1) the process further comprises:
decreasing the heating of the reduction chamber if a rapid pressure rise occurs and/or if a pressure in the reduction chamber approaches about 5 bar (5 atm).

13. The process of any one of claims 10-12, wherein step (b1) comprises neutralizing the first gaseous mixture with a base at a temperature of from about 70°C to about 100°C, or about 85°C, to form a neutralized first gaseous mixture;
optionally, wherein the base is selected from an alkali metal hydroxide, an alkaline earth metal hydroxide, an alkali metal carbonate, or an alkaline earth metal carbonate, wherein the base is optionally selected from sodium hydroxide or calcium carbonate, the process optionally further comprising cooling the neutralized first gaseous mixture, wherein the neutralized first gaseous mixture is optionally cooled to a temperature of from about 5°C to about 35°C;
optionally, wherein the neutralized first gaseous mixture is contacted with a solution comprising potassium permanganate to remove phosphorus containing molecules from the neutralized first gaseous mixture.

14. The process of any one of claims 10-13, wherein the temperature increase in the organic material is from ambient temperature to up to about 400°C;
optionally,
wherein the organic material is bitumen, the first gaseous mixture comprises a lighter fraction of synthetic crude oil, and step (a1) produces a non-volatile product comprising synthetic crude oil, the process optionally further comprising separating the excess hydrogen from the methane and the lighter fraction of synthetic crude oil after neutralizing the first gaseous mixture, the process optionally further comprising recycling the excess hydrogen to step (a1) and/or step (b1).

## Patentansprüche

1. Verfahren zur Reduktion eines organischen Materials zur Herstellung von Methan und/oder Wasserstoff, umfassend:
(a) Inkontaktbringen des organischen Materials mit einer überschüssigen Menge Wasserstoffgas in einer geschlossenen Reduktionskammer bei Umgebungstemperatur, wobei ein Sauerstoffgehalt der Reduktionskammer weniger als etwa 0,10 % beträgt, und Erwärmen der Reduktionskammer, um unter Überdruck einen Temperaturanstieg des organischen Materials von Umgebungstemperatur auf bis zu 425 °C mit einer Geschwindigkeit von bis zu etwa 8 °C pro Minute zu bewirken, um ein erstes Gasgemisch zu bilden, das Methan, Wasserstoff, Säure und teilweise reduzierte flüchtige organische Moleküle umfasst, wobei die teilweise reduzierten flüchtigen organischen Moleküle flüchtige organische Moleküle umfassen, die nicht vollständig zu Methan reduziert worden sind;
(b) Erwärmen des ersten Gasgemisches auf eine Temperatur von etwa 675 °C bis etwa 875 °C in Gegenwart einer überschüssigen Menge Wasserstoffgas, um ein zweites Gasgemisch zu bilden, umfassend:
Methan und/oder Wasserstoff und
Säure;
wobei, wenn das Verfahren der Herstellung von Wasserstoff dient, Schritt (b) ferner das Erwärmen des ersten Gasgemisches in Gegenwart von überhitztem Dampf in einem geschlossenen Reaktorbehälter umfasst, dessen Sauerstoffgehalt weniger als etwa 0,10 % beträgt, unter kontinuierlichen Mischbedingungen und in Gegenwart eines Katalysators; und
(c) Neutralisieren des zweiten Gasgemisches mit einer Base.

2. Verfahren nach Anspruch 1, wobei das Verfahren bei einem Druck von mehr als etwa 1 bar (1 atm) und weniger als etwa 5 bar (5 atm) durchgeführt wird;
wahlweise wobei das Verfahren bei einem Druck von mindestens etwa 2 bar (2 atm) und weniger als etwa 5 bar (5 atm) oder von etwa 2 bar (2 atm) bis etwa 3 bar (3 atm) durchgeführt wird.

3. Verfahren nach Anspruch 1, wobei das Verfahren in Schritt (a) ferner umfasst:
Verringern der Beheizung der Reduktionskammer, wenn ein schneller Druckanstieg auftritt und/oder wenn sich ein Druck in der Reduktionskammer etwa 5 bar (5 atm) nähert.

4. Verfahren nach einem der Ansprüche 1 bis 3, wobei das organische Material Wasser umfasst und das Verfahren in Schritt (a) ferner umfasst:
Erwärmen der Reduktionskammer, um einen Temperaturanstieg des organischen Materials auf etwa 100 °C bis etwa 105 °C zu bewirken, und Halten der Temperatur des organischen Materials bei etwa 100 °C bis etwa 105 °C, um Wasser aus dem organischen Material zu verdampfen und Dampf zu bilden; und
Entfernen des Dampfes aus der Reduktionskammer, bevor die Temperatur des organischen Materials weiter erhöht wird;
wahlweise wobei das Verfahren ferner das Abkühlen des aus der Reduktionskammer entfernten Dampfes zur erneuten Bildung von Wasser, das Neutralisieren des Wassers zur Neutralisierung gegebenenfalls vorhandener Säuren und das Behandeln des Wassers zum Entfernen gegebenenfalls vorhandener organischer Moleküle und/oder Metalle umfasst, wobei das Behandeln des Wassers wahlweise das Filtern des Wassers durch einen Aktivkohlefilter umfasst.

5. Verfahren nach einem der Ansprüche 1 bis 4,
wobei der Katalysator ein Metallkatalysator ist, wobei das Metall aus einem oder mehreren von Nickel, Kupfer, Eisen, Nickellegierungen, Zinn, Chrom und Edelmetallen ausgewählt ist;
wahlweise wobei der Katalysator in eine oder mehrere Wände des geschlossenen Reaktorbehälters eingebettet ist, wobei der geschlossene Reaktorbehälter wahlweise aus einer nickelhaltigen Stahllegierung hergestellt ist.

6. Verfahren nach einem der Ansprüche 1 bis 5, wobei Schritt (b) das Erwärmen des ersten Gasgemisches auf eine Temperatur von etwa 750 °C bis etwa 850 °C oder von etwa 800 °C bis etwa 850 °C umfasst.

7. Verfahren nach einem der Ansprüche 1 bis 6, wobei Schritt (c) das Neutralisieren des zweiten Gasgemisches mit einer Base bei einer Temperatur von etwa 70 °C bis etwa 100 °C oder etwa 85 °C umfasst, um ein neutralisiertes zweites Gasgemisch zu bilden;
wahlweise wobei die Base aus einem Alkalimetallhydroxid, einem Erdalkalimetallhydroxid, einem Alkalimetallcarbonat oder einem Erdalkalimetallcarbonat ausgewählt ist, wobei die Base wahlweise aus Natriumhydroxid oder Calciumcarbonat ausgewählt ist, wobei das Verfahren wahlweise ferner das Abkühlen des neutralisierten zweiten Gasgemisches umfasst, wobei das neutralisierte zweite Gasgemisch wahlweise auf eine Temperatur von etwa 5 °C bis etwa 35 °C abgekühlt wird;
wahlweise wobei das neutralisierte zweite Gasgemisch mit einer Kaliumpermanganat enthaltenden Lösung in Kontakt gebracht wird, um phosphorhaltige Moleküle aus dem neutralisierten zweiten Gasgemisch zu entfernen.

8. Verfahren nach einem der Ansprüche 1 bis 7, ferner umfassend das Abtrennen des überschüssigen Wasserstoffs von dem Methan nach dem Neutralisieren des zweiten Gasgemisches, wobei das Verfahren wahlweise ferner das Rückführen des überschüssigen Wasserstoffs zu Schritt (a) und/oder Schritt (b) umfasst.

9. Verfahren nach einem der Ansprüche 1 bis 8, wobei das organische Material ein organisches Abfallmaterial, eine Biomasse, ein chemischer Kampfstoff, ein Krankheitserreger oder Munition ist;
wahlweise wobei das organische Abfallmaterial Klärschlamm; kommunale und industrielle feste Abfälle oder Müll; Deponiegas; landwirtschaftliches Abfallmaterial; Mais und andere mit Schimmel und damit verbundenen Toxinen kontaminierte Nutzpflanzen; organische Lösungsmittel; halogenierte organische Verbindungen; Organophosphatverbindungen; Reifen; Kunststoffe; Rückstände aus der Schredderung von Kraftfahrzeugen (ASR); Abfälle aus Raffinerien und der chemischen Herstellung/Verarbeitung; oder fossile Brennstoffe umfasst;
wahlweise wobei die Biomasse Holzabfälle, Papierabfälle, Kartonabfälle, Holzspäne, Zellstoffabfälle oder landwirtschaftliche Biomasse umfasst;
wobei der chemische Kampfstoff einen halogenierten oder Organophosphat-Kampfstoff umfasst;
wobei der Krankheitserreger ein Virus oder ein Bakterium umfasst; und/oder
wobei die Munition Raketen oder Granaten umfasst, die explosives organisches Material und/oder Treibmittel enthalten.

10. Verfahren zur Reduktion eines organischen Materials zur Herstellung von Methan, umfassend:
(a1) Inkontaktbringen des organischen Materials mit einer überschüssigen Menge Wasserstoffgas in einer geschlossenen Reduktionskammer bei Umgebungstemperatur, wobei ein Sauerstoffgehalt der Reduktionskammer weniger als etwa 0,10 % beträgt, und Erwärmen der Reduktionskammer, um unter Überdruck einen Temperaturanstieg des organischen Materials von Umgebungstemperatur auf bis zu 425 °C mit einer Geschwindigkeit von bis zu etwa 8 °C pro Minute zu bewirken, um ein erstes Gasgemisch zu bilden, das Methan, Wasserstoff, Säure und teilweise reduzierte flüchtige organische Moleküle umfasst, wobei die teilweise reduzierten flüchtigen organischen Moleküle flüchtige organische Moleküle umfassen, die nicht vollständig zu Methan reduziert worden sind; und
(b1) Neutralisieren des ersten Gasgemisches mit einer Base.

11. Verfahren nach Anspruch 10, wobei das Verfahren bei einem Druck von mehr als etwa 1 bar (1 atm) und weniger als etwa 5 bar (5 atm) durchgeführt wird;
wahlweise wobei das Verfahren bei einem Druck von mindestens etwa 2 bar (2 atm) und weniger als etwa 5 bar (5 atm) oder von etwa 2 bar (2 atm) bis etwa 3 bar (3 atm) durchgeführt wird.

12. Verfahren nach Anspruch 10, wobei das Verfahren in Schritt (a1) ferner umfasst:
Verringern der Beheizung der Reduktionskammer, wenn ein schneller Druckanstieg auftritt und/oder wenn sich ein Druck in der Reduktionskammer etwa 5 bar (5 atm) nähert.

13. Verfahren nach einem der Ansprüche 10 bis 12, wobei Schritt (b1) das Neutralisieren des ersten Gasgemisches mit einer Base bei einer Temperatur von etwa 70 °C bis etwa 100 °C oder etwa 85 °C umfasst, um ein neutralisiertes erstes Gasgemisch zu bilden;
wahlweise wobei die Base aus einem Alkalimetallhydroxid, einem Erdalkalimetallhydroxid, einem Alkalimetallcarbonat oder einem Erdalkalimetallcarbonat ausgewählt ist, wobei die Base wahlweise aus Natriumhydroxid oder Calciumcarbonat ausgewählt ist, wobei das Verfahren wahlweise ferner das Abkühlen des neutralisierten ersten Gasgemisches umfasst, wobei das neutralisierte erste Gasgemisch wahlweise auf eine Temperatur von etwa 5 °C bis etwa 35 °C abgekühlt wird;
wahlweise wobei das neutralisierte erste Gasgemisch mit einer Kaliumpermanganat enthaltenden Lösung in Kontakt gebracht wird, um phosphorhaltige Moleküle aus dem neutralisierten ersten Gasgemisch zu entfernen.

14. Verfahren nach einem der Ansprüche 10 bis 13, wobei der Temperaturanstieg des organischen Materials von Umgebungstemperatur auf bis zu etwa 400 °C erfolgt;
wahlweise wobei das organische Material Bitumen ist, das erste Gasgemisch eine leichtere Fraktion synthetischen Rohöls umfasst und Schritt (a1) ein nichtflüchtiges Produkt erzeugt, das synthetisches Rohöl umfasst, wobei das Verfahren wahlweise ferner das Abtrennen des überschüssigen Wasserstoffs von dem Methan und der leichteren Fraktion synthetischen Rohöls nach dem Neutralisieren des ersten Gasgemisches umfasst, wobei das Verfahren wahlweise ferner das Rückführen des überschüssigen Wasserstoffs zu Schritt (a1) und/oder Schritt (b1) umfasst.

## Revendications

1. Procédé de réduction d'une matière organique pour produire du méthane et/ou de l'hydrogène, comprenant :
(a) la mise en contact de la matière organique avec une quantité en excès d'hydrogène gazeux dans une chambre de réduction fermée à température ambiante, dans lequel une teneur en oxygène de la chambre de réduction est inférieure à environ 0,10 %, et le chauffage de la chambre de réduction pour provoquer une augmentation de la température de la matière organique depuis la température ambiante jusqu'à 425 °C, à une vitesse allant jusqu'à environ 8 °C par minute, sous pression positive, afin de former un premier mélange gazeux comprenant du méthane, de l'hydrogène, de l'acide et des molécules organiques volatiles partiellement réduites, les molécules organiques volatiles partiellement réduites comprenant des molécules organiques volatiles qui n'ont pas été entièrement réduites en méthane ;
(b) le chauffage du premier mélange gazeux à une température d'environ 675 °C à environ 875 °C en présence d'une quantité en excès d'hydrogène gazeux afin de former un deuxième mélange gazeux comprenant :
du méthane et/ou de l'hydrogène, et
de l'acide ;
dans lequel, lorsque le procédé est destiné à la production d'hydrogène, l'étape (b) comprend en outre le chauffage du premier mélange gazeux en présence de vapeur surchauffée dans une cuve de réacteur fermée dont la teneur en oxygène est inférieure à environ 0,10 %, dans des conditions de mélange continu et en présence d'un catalyseur ; et
(c) la neutralisation du deuxième mélange gazeux avec une base.

2. Procédé selon la revendication 1, dans lequel le procédé est réalisé à une pression supérieure à environ 1 bar (1 atm) et inférieure à environ 5 bar (5 atm) ;
facultativement, dans lequel le procédé est réalisé à une pression d'au moins environ 2 bar (2 atm) et inférieure à environ 5 bar (5 atm) ; ou d'environ 2 bar (2 atm) à environ 3 bar (3 atm).

3. Procédé selon la revendication 1, dans lequel, à l'étape (a), le procédé comprend en outre :
la diminution du chauffage de la chambre de réduction si une augmentation rapide de pression se produit et/ou si une pression dans la chambre de réduction approche environ 5 bar (5 atm).

4. Procédé selon l'une quelconque des revendications 1 à 3, dans lequel la matière organique comprend de l'eau, et dans lequel, à l'étape (a), le procédé comprend en outre :
le chauffage de la chambre de réduction pour provoquer une augmentation de la température de la matière organique jusqu'à environ 100 °C à environ 105 °C, et le maintien de la température de la matière organique à environ 100 °C à environ 105 °C afin d'évaporer l'eau de la matière organique et de former de la vapeur ; et
l'évacuation de la vapeur de la chambre de réduction avant d'augmenter davantage la température de la matière organique ;
facultativement, dans lequel le procédé comprend en outre le refroidissement de la vapeur évacuée de la chambre de réduction pour reformer de l'eau, la neutralisation de l'eau pour neutraliser tous les acides éventuellement présents, et le traitement de l'eau pour éliminer toutes les molécules organiques et/ou tous les métaux éventuellement présents, le traitement de l'eau comprenant facultativement la filtration de l'eau à travers un filtre à charbon actif.

5. Procédé selon l'une quelconque des revendications 1 à 4,
dans lequel le catalyseur est un catalyseur métallique, le métal étant choisi parmi un ou plusieurs éléments parmi le nickel, le cuivre, le fer, les alliages de nickel, l'étain, le chrome et les métaux nobles ;
facultativement, dans lequel le catalyseur est incorporé dans une ou plusieurs parois de la cuve de réacteur fermée, la cuve de réacteur fermée étant facultativement construite en un alliage d'acier contenant du nickel.

6. Procédé selon l'une quelconque des revendications 1 à 5, dans lequel l'étape (b) comprend le chauffage du premier mélange gazeux à une température d'environ 750 °C à environ 850 °C, ou d'environ 800 °C à environ 850 °C.

7. Procédé selon l'une quelconque des revendications 1 à 6, dans lequel l'étape (c) comprend la neutralisation du deuxième mélange gazeux avec une base à une température d'environ 70 °C à environ 100 °C, ou d'environ 85 °C, afin de former un deuxième mélange gazeux neutralisé ;
facultativement, dans lequel la base est choisie parmi un hydroxyde de métal alcalin, un hydroxyde de métal alcalino-terreux, un carbonate de métal alcalin ou un carbonate de métal alcalino-terreux, la base étant facultativement choisie parmi l'hydroxyde de sodium ou le carbonate de calcium, le procédé comprenant facultativement en outre le refroidissement du deuxième mélange gazeux neutralisé, le deuxième mélange gazeux neutralisé étant facultativement refroidi à une température d'environ 5 °C à environ 35 °C ;
facultativement, dans lequel le deuxième mélange gazeux neutralisé est mis en contact avec une solution comprenant du permanganate de potassium afin d'éliminer les molécules contenant du phosphore du deuxième mélange gazeux neutralisé.

8. Procédé selon l'une quelconque des revendications 1 à 7, comprenant en outre la séparation de l'hydrogène en excès du méthane après neutralisation du deuxième mélange gazeux, le procédé comprenant facultativement en outre le recyclage de l'hydrogène en excès vers l'étape (a) et/ou l'étape (b).

9. Procédé selon l'une quelconque des revendications 1 à 8, dans lequel la matière organique est un déchet organique, une biomasse, un agent de guerre chimique, un agent pathogène ou une munition ;
facultativement, dans lequel le déchet organique comprend des boues d'épuration ; des déchets solides ou des ordures ménagers et industriels ; du gaz de décharge ; des déchets agricoles ; du maïs et d'autres cultures contaminés par des moisissures et des toxines associées ; des solvants organiques ; des composés organiques halogénés ; des composés organophosphorés ; des pneus ; des matières plastiques ; des résidus de broyage automobile (ASR) ; des déchets de raffinerie et de fabrication/transformation chimique ; ou des combustibles fossiles ;
facultativement, dans lequel la biomasse comprend des déchets de bois, des déchets de papier, des déchets de carton, des copeaux de bois, des déchets de pâte à papier ou de la biomasse agricole ;
dans lequel l'agent de guerre chimique comprend un agent de guerre chimique halogéné ou organophosphoré ;
dans lequel l'agent pathogène comprend un virus ou une bactérie ; et/ou
dans lequel la munition comprend des roquettes ou des obus contenant une matière organique explosive et/ou des agents propulseurs.

10. Procédé de réduction d'une matière organique pour produire du méthane, comprenant :
(a1) la mise en contact de la matière organique avec une quantité en excès d'hydrogène gazeux dans une chambre de réduction fermée à température ambiante, dans lequel une teneur en oxygène de la chambre de réduction est inférieure à environ 0,10 %, et le chauffage de la chambre de réduction pour provoquer une augmentation de la température de la matière organique depuis la température ambiante jusqu'à 425 °C, à une vitesse allant jusqu'à environ 8 °C par minute, sous pression positive, afin de former un premier mélange gazeux comprenant du méthane, de l'hydrogène, de l'acide et des molécules organiques volatiles partiellement réduites, les molécules organiques volatiles partiellement réduites comprenant des molécules organiques volatiles qui n'ont pas été entièrement réduites en méthane ; et
(b1) la neutralisation du premier mélange gazeux avec une base.

11. Procédé selon la revendication 10, dans lequel le procédé est réalisé à une pression supérieure à environ 1 bar (1 atm) et inférieure à environ 5 bar (5 atm) ;
facultativement, dans lequel le procédé est réalisé à une pression d'au moins environ 2 bar (2 atm) et inférieure à environ 5 bar (5 atm) ; ou d'environ 2 bar (2 atm) à environ 3 bar (3 atm).

12. Procédé selon la revendication 10, dans lequel, à l'étape (a1), le procédé comprend en outre :
la diminution du chauffage de la chambre de réduction si une augmentation rapide de pression se produit et/ou si une pression dans la chambre de réduction approche environ 5 bar (5 atm).

13. Procédé selon l'une quelconque des revendications 10 à 12, dans lequel l'étape (b1) comprend la neutralisation du premier mélange gazeux avec une base à une température d'environ 70 °C à environ 100 °C, ou d'environ 85 °C, afin de former un premier mélange gazeux neutralisé ;
facultativement, dans lequel la base est choisie parmi un hydroxyde de métal alcalin, un hydroxyde de métal alcalino-terreux, un carbonate de métal alcalin ou un carbonate de métal alcalino-terreux, la base étant facultativement choisie parmi l'hydroxyde de sodium ou le carbonate de calcium, le procédé comprenant facultativement en outre le refroidissement du premier mélange gazeux neutralisé, le premier mélange gazeux neutralisé étant facultativement refroidi à une température d'environ 5 °C à environ 35 °C ;
facultativement, dans lequel le premier mélange gazeux neutralisé est mis en contact avec une solution comprenant du permanganate de potassium afin d'éliminer les molécules contenant du phosphore du premier mélange gazeux neutralisé.

14. Procédé selon l'une quelconque des revendications 10 à 13, dans lequel l'augmentation de température de la matière organique s'effectue depuis la température ambiante jusqu'à environ 400 °C ;
facultativement, dans lequel la matière organique est du bitume, le premier mélange gazeux comprend une fraction plus légère de pétrole brut synthétique, et l'étape (a1) produit un produit non volatil comprenant du pétrole brut synthétique, le procédé comprenant facultativement en outre la séparation de l'hydrogène en excès du méthane et de la fraction plus légère de pétrole brut synthétique après neutralisation du premier mélange gazeux, le procédé comprenant facultativement en outre le recyclage de l'hydrogène en excès vers l'étape (a1) et/ou l'étape (b1).
